# EUROPÄISCHE PATENTSCHRIFT

(11) **EP 0 358 124 B1**
(45) Veröffentlichungstag und Bekanntmachung des Hinweises auf die Patenterteilung: **20.10.1993**
(21) Anmeldenummer: 89116176.2
(22) Anmeldetag: 01.09.1989
(51) Int. Cl.: B01D 53/36, B01J 23/60, B01J 23/89

(54) **Katalysator zur Reinigung der Abgase von Verbrennungskraftmaschinen unter Verminderung der Emission von Schwefelwasserstoff, Herstellung und Verwendung**
Catalyst for cleaning exhaust gases from combustion engines with reduction of hydrogen sulphide emission, production and use
Catalyseurs pour purifier les gaz d'échappement de moteurs à combustion en réduisant l'émission de l'hydrogène sulfuré, fabrication et application

(30) Priorität: 07.09.1988 DE 3830319
(43) Veröffentlichungstag der Anmeldung: 14.03.1990
(73) Patentinhaber: Degussa Aktiengesellschaft, 60311 Frankfurt (DE)
(72) Erfinder: Lox, Egbert, Dr., D-6450 Hanau 9 (DE); Koberstein, Edgar, Dr., D-8755 Alzenau (DE); Engler, Bernd, Dr., D-6450 Hanau 9 (DE)

(56) Entgegenhaltungen:
- EP-A- 0 130 835
- EP-A- 0 266 875
- DE-C- 2 907 106
- FR-A- 2 258 218
- FR-A- 2 321 940
- US-A- 4 088 607

## Beschreibung

Die Erfindung betrifft einen Katalysator für die Reinigung der Abgase von Verbrennungskraftmaschinen durch Oxidation und/oder Reduktion, das Herstellungsverfahren für den Katalysator und seine Verwendung. Die Katalysatoren können die Platingruppenmetalle Platin, Palladium und Rhodium einzeln oder in Kombination enthalten. Sie können, je nach Zusammensetzung als Reduktionskatalysator eines Doppelbettreaktors (hier wird das Abgas zuerst einem Reduktionskatalysator und dann nach Luftbeimischung einem Oxidationskatalysator zugeführt) oder als multifunktioneller Katalysator für die gleichzeitige Konversion der oxidierbaren und der reduzierbaren Bestandteile des Abgases, verwendet werden.

Motorabgaskatalysatoren, insbesondere solche mit hohen Ceroxidgehalten, vermögen unter oxidierenden Abgasbedingungen Schwefeloxide zu binden. Beim Wechsel auf reduzierende Abgase während des Fahrbetriebs können die so gespeicherten Schwefeloxidmengen z. T. als Schwefelwasserstoff wieder freigesetzt werden.

Da Motorabgase aufgrund einer Verwendung von schwefelhaltigen Treibstoffen Schwefeldioxid enthalten können und der Abgaskatalysator je nach Fahrweise sowohl oxidierende als auch reduzierende Bedingungen vorfindet, kann bei Verwendung herkömmlicher Autoabgaskatalysatoren Schwefelwasserstoff emittiert werden. Die H₂S-Geruchsschwelle kann dabei kurzzeitig deutlich überschritten werden.

Es ist zwar seit einiger Zeit bekannt, daß nickelhaltige Katalysatoren nur sehr geringe Schwefelwasserstoffemissionen zeigen, doch ist der Gebrauch von Nickel als Komponente bei Motorabgaskatalysatoren wegen seiner kancerogenen Wirkung umstritten. Er sollte daher grundsätzlich vermieden werden.

Aus umwelthygienischen Gründen besteht daher ein Bedarf an nickelfreien Motorabgaskatalysatoren mit verminderter Neigung zur Schwefelwasserstoffemission.

Die Erfindung geht von der allgemeinen Lehre der DE-C 29 07 106 zur Formulierung von Abgasreinigungskatalysatoren aus. Diese Druckschrift beschreibt im wesentlichen einen Abgaskatalysator mit einer auf Aluminiumoxid der Übergangsreihe aufgebrachten aktiven Phase aus 0,03 bis 3 Gew.-% Platin und Rhodium, und gegebenenfalls Nickel, erhalten durch Imprägnieren des gegebenenfalls gitterstabilisierten Trägers mit einer wäßrigen Lösung eines Salzes des Platins und Rhodiums und gegebenenfalls des Nickels, Trocknen und Behandeln in einem Wasserstoff enthaltenden Gasstrom bei 250 bis 650° C, wobei der Katalysator weiterhin 5 bis 15 Gew.-% an einem Gemisch von CeO₂ und ZrO₂ in Gewichtsverhältnissen von 20 : 80 bis 80 : 20 und 1 bis 10 Gew.-% an Fe₂O₃ enthält. Dieses Gemisch wird vor dem Einbringen der Edelmetalle mit einer wäßrigen Lösung von Cer-, Zirkonium- und Eisensalz imprägniert oder mit deren Oxiden vermischt und anschließend 30 bis 180 Min. an der Luft bei 500 - 700° C getempert. Ohne einen Gehalt an Nickel ergeben diese Katalysatoren ein Abgas mit deutlichem H₂S-Geruch, so daß sich die Aufgabe stellte, mit anderen Mitteln den störenden Abgasgeruch zu eliminieren. Durch eine Modifikation der nickelfreien Zusammensetzung, die sich gleichermaßen auf Oxidkomponente und fertigen Katalysator erstrecken kann, insbesondere durch Mitverwendung von Zinkoxid in den bekannten, gegebenenfalls mengenmäßig erweiterten Formulierungen gelingt es, den besprochenen Mangel selbst bei erhöhten Ceroxidgehalten, die bezüglich der Neigung zur H₂S-Emission besonders kritisch sind, praktisch vollständig zu beseitigen.

Aus der französischen Offenlegungsschrift Nr. 2 321 940 sind Katalysatoren zur Reinigung der Abgase von Brennkraftmaschinen bekannt, die einen Träger aus Aluminiumoxid aufweisen, welcher ca. 10 Gew.% CeO₂, 1,53 Gew.% ZnO und eine auf den Träger aufgebrachte aktive Phase aus 0,2 Gew.% Pt und 0,011 Gew.% Rh enthält. Der Gehalt des Aluminiumoxids an CeO₂ dient zur Verbesserung der Temperaturstabilität des Aluminiumoxids. Die beschriebenen Katalysatoren sollen durch ihre Zusammensetzung verhindern, daß das im Abgas enthaltene Schwefeldioxid zu dem ökologisch bedenklicheren Schwefeltrioxid oxidiert wird. Lösungsansätze für die Vermeidung von Schwefelwasserstoff-Emissionen im Falle hoher CeO₂-Gehalte enthält diese Offenlegungsschrift nicht.

Ein Gegenstand der Erfindung ist ein Katalysator für die Reinigung der Abgase von Brennkraftmaschinen unter Verminderung der Emission von Schwefelwasserstoff mit Aluminiumoxid der Übergangsreihe als Träger, welcher 2 bis 70 Gew.% CeO₂ und 0,6 bis 20 Gew.% ZrO₂ enthält, und einer auf den Träger aufgebrachten aktiven Phase aus 0,01 bis 3 Gew.% Platin, Palladium und/oder Rhodium, mit einem Gewichtsverhältnis zwischen Platin und/oder Palladium und dem gegebenenfalls anwesenden Rhodium von 2 : 1 bis 30 : 1, wobei der Katalysator gegebenenfalls in Form eines Überzugs auf einem wabenförmigen inerten Träger aus Keramik oder Metall oder auf einem Schaumkeramikträger in einer Menge von 5 bis 30 Gew.%, bezogen auf das Gewicht des Trägers, vorliegt.

Der Katalysator ist dadurch gekennzeichnet, daß er 0,1 bis 40, vorzugsweise 0,5 bis 20 Gew. % ZnO, bezogen auf Al₂O₃, enthält.

Die Wirkung des erfindungsgemäßen Katalysators kann dadurch differenziert werden, daß er neben dem CeO₂ und gegebenenfalls dem ZrO₂ als Trägermaterialmodifizierende Komponenten noch eine oder mehrere der Verbindungen Fe₂O₃, BaO, CaO, La₂O₃ und/oder andere Seltene Erdmetalloxide im Bereich von 0,5 bis 20 Gew.% enthält. Unter anderem können natürlich vorkommende Oxidgemische Seltener Erden Anwendung finden.

Der Katalysator kann, wie schon erwähnt, in Form eines Überzugs auf einem wabenförmigen Träger aus Keramik oder Metall oder als Schüttgutkatalysator oder als wabenförmiges monolithisches Vollextrudat (bei dem der wabenförmige Monolith durch und durch aus dem Katalysator besteht) oder als Schaumkeramik vorliegen.

Ein anderer Gegenstand der Erfindung ist ein Verfahren zur Herstellung des beschriebenen Katalysators. Es ist gekennzeichnet durch Imprägnieren des gegebenenfalls gitterstabilisierten Trägers mit einer wäßrigen Lösung von Cersalz und Zirkonsalz oder durch Vermischen des gegebenenfalls gitterstabilisierten Trägers mit einer wäßrigen Suspension von deren Oxiden, Hydroxiden oder Carbonaten und nachfolgendes Tempern an der Luft bei 500 bis 900° C sowie anschließendes Imprägnieren des Trägers mit einer wäßrigen Lösung eines Salzes der Edelmetalle, Trocknen und Behandeln, gegebenenfalls in einem Wasserstoff enthaltenden Gasstrom bei Temperaturen von 250 bis 650° C, wobei der ZnO-Gehalt durch Imprägnieren des Trägermaterials mit Zinksalz sowie Cer- und gegebenenfalls Zirkonsalz oder durch Imprägnieren des bereits CeO₂ und ZrO₂ enthaltenden Trägermaterials vor dem Aufbringen der Edelmetallkomponente mit einer gelösten oder dispergierten zinkhaltigen Verbindung, oder aber durch Nachimprägnieren des fertigen Katalysators mit einer gelösten zinkhaltigen Verbindung sowie jeweils Trocknen und thermisches Aktivieren bei Temperaturen von 150 bis 650° C eingebracht wird.

Ein weiterer Gegenstand der Erfindung besteht in der Verwendung des Katalysators als Oxidations-und/oder Reduktionskatalysator zur Reinigung der Abgase von Verbrennungskraftmaschinen unter Verminderung der Emission von Schwefelwasserstoff.

Die Dotierung der Trägerkomponente mit CeO₂ und z. B. ZrO₂ sowie das Aufbringen der aktiven Edelmetalle erfolgt im wesentlichen nach den in der DE-C 29 07 106 beschriebenen Maßnahmen. Die Dotierung mit ZnO kann auf einfache Weise mittels eines Zinksalzes in wäßriger Lösung erfolgen. Das Zinkoxid kann aber auch der Dotierungslösung als Feststoff zugesetzt werden.

Das Trägermaterial, z. B. γ-Aluminiumoxid und/oder eine andere Kristallphase aus dem Übergangsfeld zu α-Aluminiumoxid, kann durch Imprägnieren mit Lösungen von Salzen der Erdalkalimetalle, von Zirkon und von Elementen der Reihe der Seltenen Erden sowie siliciumhaltiger Verbindungen und anschließendes etwa 4 bis 12-stündiges Erhitzen gitterstabilisiert sein. Anstelle der Imprägnierung kann eine Kopräzipitation von Salzen des Aluminiums und der Stabilisatorvorstufe erfolgt sein.

Je nach der Wahl der Katalysatorzusammensetzung kann ein nur reduzierendes, ein nacheinander oxidierendes und reduzierendes oder ein gleichzeitig oxidierendes und reduzierendes Abgasreinigungssystem bestückt werden. Reduktionskatalysatoren enthalten als aktive Phase vorzugsweise Platin und Rhodium, Doppelbettsysteme einen Platin und Rhodium enthaltenden ersten Katalysator und einen Platin, Platin/Palladium, Platin/Rhodium oder Platin/Palladium/Rhodium enthaltenden zweiten Katalysator; multifunktionelle Katalysatoren enthalten vorzugsweise Platin/Rhodium oder Platin/Palladium/Rhodium.

### Beispiel 1

Es wurde ein Dreiweg-Katalysator des Pellettyps, bezeichnet als Katalysator A, hergestellt. Als Trägermaterial wurden γ-Aluminiumoxidpellets mit einem Durchmesser von 3 mm und einer spezifischen Oberfläche von 120 m²/g verwendet. In das Trägermaterial wurden 7,6 Gew.% CeO₂ und 0,6 Gew.% ZrO₂ durch Imprägnieren mit einer wäßrigen Lösung der jeweiligen Acetate, Trocknen bei 120° C und Calcinieren bei 600° C an der Luft; eingebracht.

Weiterhin wurden die Edelmetalle Platin, Palladium und Rhodium im Gewichtsverhältnis Pt : Pd : Rh = 4 : 12 : 1 durch Imprägnieren mit Platinnitrat-, Palladiumchlorid- und Rhodiumchloridlösung, Trocknen und Tempern bei 600° C im Luftstrom eingebracht, so daß der Katalysator letzlich 0,029 Gew.% Pt, 0,087 Gew.% Pd und 0,007 Gew.% Rh enthielt. Die Gewichtsangaben sind jeweils bezogen auf das Gewicht des γ-Aluminiumoxids.

Es wurde ein weiterer Pelletkatalysator mit der Bezeichnung Katalysator B hergestellt. Die Herstellung entsprach der jenigen von Katalysator A mit der Ausnahme, daß zusammen mit dem Aufbringen von Cer und Zirkon auch ZnO als Zinkacetat zugegeben wurde.

Der fertige Katalysator B enthielt 7,6 Gew.% CeO₂, 0,6 Gew.% ZrO₂, 0,029 Gew.% Pt, 0,087 Gew.% Pd, 0,007 Gew.% Rh und 2 Gew.% ZnO, jeweils bezogen auf die Aluminiumoxidmenge.

Die Schwefelwasserstoffemission der Katalysatoren A und B wurde in einem zweistufigen Verfahren in einem Synthesegasreaktor bestimmt. Die erste Stufe wurde bei den folgenden Prüfbedingungen ausgeführt:
- Temperatur:: 450° C
- Raumgeschwindigkeit:: 66 000 l Abgasvolumen/h/l Katalysatorvolumen
- Dauer:: 1 Stunde
- Gaszusammensetzung:: mager: λ = 1.004

| | | | | | |
|---|---|---|---|---|---|
| CO | 1.0 Vol.% | SO₂ | 20 ppm | O₂ | 1.05 Vol.% |
| C₃H₆ | 0.033 Vol.% | CO₂ | 14 Vol.% | N₂ | Rest |
| C₃H₈ | 0.017 Vol.% | H₂O | 10 Vol.% | | |
| NO | 0.10 Vol.% | H₂ | 0.33 Vol.% | | |

Am Ende der ersten Prüfstufe wurde die Gaszusammensetzung bei gleichbleibender Temperatur und Raumgeschwindigkeit auf "fett" umgestellt (λ = 0,92); während der ersten zwei Minuten nach dem Umschalten wurden die Abgase gesammelt und der durchschnittliche Schwefelwasserstoffgehalt bestimmt.

Die Gaszusammensetzung in der zweiten Stufe betrug:

| | | | | | |
|---|---|---|---|---|---|
| CO | 2.1 Vol.% | SO₂ | 20 ppm | O₂ | 0.25 Vol.% |
| C₃H₆ | 0.033 Vol.% | CO₂ | 14 Vol.% | N₂ | Rest |
| C₃H₈ | 0.017 Vol.% | H₂O | 10 Vol.% | | |
| NO | 0.10 Vol.% | H₂ | 0.71 Vol.% | | |

Die auf diese Art ermittelte Emission von Schwefelwasserstoff betrug bei Katalysator A 80 mg/m³, bei Katalysator B nur noch 18 mg/m³.

### Beispiel 2

Es wurden 4 weitere Katalysatoren hergestellt, welche als Katalysatoren C, D, E und F bezeichnet sind.

Katalysator C wurde in zwei Schritten hergestellt. Im ersten Schritt wurde ein aus Cordierit bestehender Monolith mit 61 Zellen/cm² mit einer Beschichtungssuspension, bestehend aus mit 2,2 Gew.% ZrO₂, 11,1 Gew.% La₂O₃ und 22,2 Gew.% CeO₂ dotiertem γ-Al₂O₃ (als 35 Gew.%ige wäßrige Dispersion), beschichtet.

Die Gewichtsangaben beziehen sich jeweils auf die Menge des γ-Aluminiumoxids.

Der so beschichtete Monolith wurde während 30 Minuten bei 250° C getrocknet und anschließend während 2 Stunden bei 700° C in Luftatmosphäre getempert.

Im zweiten Schritt wurden die Edelmetalle Platin und Rhodium in einem Gewichtsverhältnis Pt : Rh = 5 : 1 aufgebracht, indem der mit der Beschichtungssuspension beschichtete Monolith in eine wäßrige Lösung von Platin- und Rhodium-Nitrat getaucht wurde. Die überschüssige Lösung wurde mit Luft ausgeblasen; der Katalysator wurde dann bei 250° C während 30 Minuten getrocknet. anschließend während 30 Minuten bei 500° C im Luftstrom aktiviert.
Schließlich wurde er während 4 Stunden bei 700° C in einem Strom von Wasserstoff reduziert.

Der fertige, mit C bezeichnete Katalysator enthielt 0,87 Gew.% Pt und 0,17 Gew.% Rh, jeweils bezogen auf die Menge des Aluminiumoxids.

Katalysator D wurde in drei Schritten hergestellt. Der erste Schritt ist identisch mit dem ersten Schritt der Herstellung von Katalysator C. Im zweiten Schritt wurde der mit derselben Beschichtungssuspension wie Katalysator C beschichtete Monolith in eine gesättigte wäßrige Zinkacetatlösung getaucht. Die überschüssige Lösung wurde mit Luft ausgeblasen und der Katalysator anschließend während 30 Minuten bei 250° C getrocknet und während 2 Stunden bei 600° C getempert.

Im dritten Schritt wurden die Edelmetalle Platin und Rhodium entsprechend dem zweiten Herstellungsschritt von Katalysator C aufgebracht.

Der fertige Katalysator D enthielt 0,87 Gew.% Pt, 0, 17 Gew.% Rh, 22,2 Gew.% CeO₂, 11,1 Gew.% La₂O₃, 2,2 Gew.% ZrO₂ und 7,4 Gew.% ZnO, jeweils bezogen auf die Menge des Aluminiumoxids.

Katalysator E wurde wie Katalysator D hergestellt mit der Ausnahme, daß er zweimal in die gesättigte Zinkacetatlösung getaucht wurde mit dazwischenliegendem Ausblasen der überschüssigen Lösung mit Luft und anschließendem 30 minütigen Trocknen bei 250° C.

Der fertige Katalysator E enthielt 0,87 Gew.% Pt, 0,17 Gew.% Rh, 22,2 Gew.% CeO₂, 11,1 Gew.% La₂O₃, 2,2 Gew.% ZrO₂ und 17,5 Gew.% ZnO, jeweils bezogen auf die Menge des Aluminiumoxids.

Katalysator F wurde ebenso wie Katalysator D hergestellt mit der Ausnahme, daß er dreimal in die Zinkacetatlösung getaucht wurde mit dazwischenliegendem Ausblasen der überschüssigen Lösung mit Luft und 30 minütigen Trocknen bei 250° C.

Der fertige Katalysator F enthielt 0,87 Gew.% Pt, 0,17 Gew.% Rh, 22,2 Gew.% CeO₂, 11,1 Gew.% La₂O₃, 2,2 Gew.% ZrO₂ und 27,4 Gew.% ZnO.

Die H₂S-Emission der Katalysatoren C, D, E und F wurde gemäß dem in Beispiel 1 beschriebenen Verfahren gemessen.

Die in der nachstehenden Tabelle zusammengefaßten Ergebnisse zeigen, daß durch Zufügen von ZnO die H₂S-Emissionen der Katalysatoren weitgehend verringert werden können.

| Katalysator | ZnO-Gehalt Gew.% | H₂S-Emission mg/m³ |
|---|---|---|
| C | 0 | 69 |
| D | 7,4 | 66 |
| E | 17,5 | 30 |
| F | 27,4 | 24 |

## Patentansprüche

1. Katalysator für die Reinigung der Abgase von Brennkraftmaschinen mit Aluminiumoxid der Übergangsreihe als Träger, welcher 2 bis 70 Gew. % CeO₂ und 0,6 bis 20 Gew.% ZrO₂ enthält, und einer auf den Träger aufgebrachten aktiven Phase aus 0,01 bis 3 Gew.% Platin, Palladium und/oder Rhodium, mit einem Gewichtsverhältnis zwischen Platin und/oder Palladium und dem gegebenenfalls anwesenden Rhodium von 2 : 1 bis 30 : 1, wobei der Katalysator gegebenenfalls in Form eines Überzugs auf einem wabenförmigen inerten Träger aus Keramik oder Metall oder auf einem Schaumkeramikträger in einer Menge von 5 bis 30 Gew.%, bezogen auf das Gewicht des Trägers, vorliegt,
**dadurch gekennzeichnet,**
daß der Katalysator 0,1 bis 40, vorzugsweise 0,5 bis 20 Gew.% ZnO, bezogen auf Al₂O₃, enthält.

2. Katalysator nach Anspruch 1,
**dadurch gekennzeichnet,**
daß er neben dem CeO₂ und ZrO₂ als Trägermaterial-modifizierende Komponenten 0,5 bis 20 Gew.% Fe₂O₃, BaO, CaO, La₂O₃ und/oder andere Seltene Erdmetalloxide enthält.

3. Verfahren zur Herstellung des Katalysators nach Anspruch 1 oder 2,
**gekennzeichnet durch,**
Imprägnieren des gegebenenfalls gitterstabilisierten Trägers mit einer wäßrigen Lösung von Cersalz und Zirkonsalz oder durch Vermischen des gegebenenfalls gitterstabilisierten Trägers mit einer wäßrigen Suspension von deren Oxiden, Hydroxiden oder Carbonaten und nachfolgendes Tempern an der Luft bei 500 bis 900° C sowie anschließendes Imprägnieren des Trägers mit einer wäßrigen Lösung eines Salzes der Edelmetalle, Trocknen und Behandeln, gegebenenfalls in einem Wasserstoff enthaltenden Gasstrom bei Temperaturen von 250 bis 650° C, wobei der ZnO-Gehalt durch Imprägnieren des Trägermaterials mit Zinksalz sowie Cer- und Zirkonsalz oder durch Imprägnieren des bereits CeO₂ und ZrO₂ enthaltenden Trägermaterials vor dem Aufbringen der Edelmetallkomponente mit einer gelösten oder dispergierten zinkhaltigen Verbindung, oder aber durch Nachimprägnieren des fertigen Katalysators mit einer gelösten zinkhaltigen Verbindung sowie jeweils Trocknen und thermisches Aktivieren bei Temperaturen von 150 bis 650° C eingebracht wird.

4. Verwendung des Katalysators nach den Ansprüchen 1 oder 2 als Oxidations- und/oder Reduktionskatalysator zur Reinigung der Abgase von Verbrennungskraftmaschinen unter Verminderung der Emission von Schwefelwasserstoff.

## Claims

1. Catalyst for purifying internal combustion engine exhaust gases, having aluminium oxide of the transition series as the support which contains from 2 to 70 wt-% CeO₂ and from 0.6 to 20 wt-% of ZrO₂, and having applied to the support an active phase of from 0.01 to 3 wt-% of platinum, palladium and/or rhodium, the weight ratio of platinum and/or palladium to optionally present rhodium being from 2 : 1 to 30 : 1, wherein the catalyst is optionally present in the form of a coating on an inert ceramic or metal support of honeycomb structure or on a foamed ceramic support in a quantity of from 5 to 30 wt-%, calculated on the weight of the support, characterised in that the catalyst contains from 0.1 to 40, preferably from 0.5 to 20 wt-% of ZnO, calculated on Al₂O₃.

2. Catalyst according to Claim 1, characterised in that in addition to the CeO₂ and ZrO₂ it contains from 0.5 to 20 wt-% of Fe₂O₃, BaO, CaO, La₂O₃ and/or other rare earth metal oxides as components which modify the support material.

3. Process for the preparation of the catalyst according to Claim 1 or Claim 2, characterised by impregnating the support, whereof the lattice is optionally stabilised, with an aqueous solution of cerium salt and zirconium salt or by mixing the support, whereof the lattice is optionally stabilised, with an aqueous suspension of oxides, hydroxides or carbonates thereof, and subsequent tempering at from 500 to 900 °C in air, followed by impregnation of the support with an aqueous solution of a noble metal salt, drying and treatment, optionally in a hydrogen-containing gas stream at temperatures of from 250 to 650 °C, wherein the ZnO content is introduced by impregnating the support material with zinc salt and with cerium salt and zirconium salt, or by impregnating the support material which already contains CeO₂ and ZrO₂ with a dissolved or dispersed zinc-containing compound prior to applying the noble metal component, or alternatively by post-impregnating the finished catalyst with a dissolved zinc-containing compound, and in each case drying and thermal activation at temperatures of from 150 to 650 °C.

4. Use of the catalyst according to Claim 1 or Claim 2 as an oxidation and/or reduction catalyst for purifying internal combustion engine exhaust gases, with reduced emission of hydrogen sulphide.

## Revendications

1. Catalyseur pour purifier les gaz d'échappement de moteurs à combustion interne avec de l'oxyde d'aluminium de la série de transition comme support, lequel contient de 2 à 70 % en poids de CeO₂ et de 0,6 à 20 % en poids de ZrO₂ et avec une phase active appliquée sur le support composée de 0,01 à 3 % en poids de platine, de palladium et/ou de rhodium ayant un rapport de poids entre platine et/ou palladium et le rhodium éventuellement présent allant de 2 : 1 jusqu'à 30 : 1, tandis que le catalyseur se présente éventuellement sous forme d'un revêtement sur un support inerte en forme de nid d'abeilles en céramique ou en métal ou sur un support en céramique cellulaire en une quantité de 5 à 30 % en poids rapporté au poids du support, caractérisé
- en ce que le catalyseur contient de 0,1 à 40, de préférence de 0,5 à 20 % en poids de ZnO, rapporté à Al₂O₃.

2. Catalyseur selon la revendication 1, caractérisé en ce que, outre le CeO₂ et le ZrO₂, il contient comme composants modifiant le matériau du support de 0,5 à 20 % en poids de Fe₂O₃, BaO, CaO, La₂O₃ et/ou d'autres oxydes métalliques de terres rares.

3. Procédé de préparation du catalyseur selon les revendications 1 ou 2, caractérisé par :
- imprégnation du support éventuellement stabilisé en réseau avec une solution aqueuse de sel de cérium et de sel de Zirconium ou par mélange du support éventuellement stabilité en réseau avec une suspension aqueuse de leurs oxydes hydroxydes ou carbonates et recuit suivant à l'air de 500 à 900°C ainsi que,
- imprégnation ensuite du support avec une solution aqueuse d'un sel des métaux nobles, séchage et traitement, éventuellement dans un courant gazeux contenant de l'hydrogène à des températures de 250 à 650°C tandis que,
- la teneur du ZnO est introduite par l'imprégnation du matériau de support avec du sel de zinc, ainsi que du sel de cérium et du sel de zirconium ou parl'imprégnation du matériau de support contenant déjà CeO₂ et ZrO₂ avant l'application du composant de métal noble, avec un composé contenant du zinc dissout ou dispersé, ou bien aussi par l'imprégnation postérieure du catalyseur terminé avec un composé dissout contenant du zinc ainsi que respectivement séchage et activation thermique à des températures de 150 à 650°C.

4. Utilisation du catalyseur selon les revendications 1 ou 2, comme catalyseur d'oxydation et/ou de réduction pour purifier les gaz d'échappement de moteurs à combustion interne en réduisant l'émission d'hydrogène sulfuré.
